(19) Europäisches Patentamt
European Patent Office
Office européen des brevets

(11) **EP 3 802 631 B1**

(12) **EUROPEAN PATENT SPECIFICATION**

(45) Date of publication and mention
of the grant of the patent:
**23.04.2025 Bulletin 2025/17**

(21) Application number: **19735430.1**

(22) Date of filing: **29.05.2019**

(51) International Patent Classification (IPC):
**C08F 4/657** *(2006.01)*　　**C08F 210/16** *(2006.01)*
**C08F 2/06** *(2006.01)*

(52) Cooperative Patent Classification (CPC):
(C-Sets available)
**C08F 210/16**　　　　　　　　　　　　(Cont.)

(86) International application number:
**PCT/US2019/034305**

(87) International publication number:
**WO 2019/231991 (05.12.2019 Gazette 2019/49)**

(54) **ZIEGLER-NATTA CATALYST SYSTEM HAVING A TREATED MAGNESIUM CHLORIDE COMPONENT**

ZIEGLER-NATTA-KATALYSATORSYSTEM MIT EINER BEHANDELTEN MAGNESIUMCHLORIDKOMPONENTE

SYSTÈME CATALYTIQUE ZIEGLER-NATTA AYANT UN COMPOSANT CHLORURE DE MAGNÉSIUM TRAITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.06.2018 US 201862679279 P**

(43) Date of publication of application:
**14.04.2021 Bulletin 2021/15**

(73) Proprietor: **Dow Global Technologies LLC Midland, MI 48674 (US)**

(72) Inventors:
• **CHEN, Linfeng**
  **Lake Jackson, Texas 77566 (US)**
• **HIRSEKORN, Kurt F.**
  **Lake Jackson, Texas 77566 (US)**

• **DEMIRORS, Mehmet**
  **Lake Jackson, Texas 77566 (US)**

(74) Representative: **Boult Wade Tennant LLP Salisbury Square House 8 Salisbury Square London EC4Y 8AP (GB)**

(56) References cited:
**WO-A1-2012/166469　　CA-A- 1 128 920**
**US-A- 4 361 685**

Remarks:
The file contains technical information submitted after the application was filed and not included in this specification

(52) Cooperative Patent Classification (CPC): (Cont.)

C-Sets
**C08F 210/16, C08F 2/06;**
**C08F 210/16, C08F 4/6576;**
C08F 210/16, C08F 210/14, C08F 2500/02;
C08F 210/16, C08F 210/14, C08F 2500/07

## Description

### CROSS REFERENCE TO RELATED APPLICATIONS

This application claims priority to U.S. Provisional Application 62/679,279, filed June 1, 2018.

### TECHNICAL FIELD

Embodiments of the present disclosure generally relate to procatalysts containing high oxidation state transition metal compounds that may be used to produce ethylene-based polymers. More specifically, embodiments of the present disclosure relate to procatalysts containing high oxidation state transition metal compounds, with the exception of vanadium, that may be used to produce ethylene-based polymers with an increased high density fraction.

### BACKGROUND

Ethylene-based polymers are commonly used in a variety of applications depending on the structure of the polymer. For example, high density polyethylene (HDPE) may be used as bottles, piping, geomembranes, plastic lumber, *etc.* It has been estimated that approximately 30 million metric tons of HDPE is produced each year.

HDPE has a large strength to density ratio. Although the density of HDPE is only marginally higher than that of low-density polyethylene (LDPE), HDPE has little branching, giving it stronger intermolecular forces and tensile strength than LDPE. The difference in strength exceeds the difference in density, giving HDPE a higher specific strength. It is also harder and more opaque and can withstand somewhat higher temperatures (e.g., 120 °C/ 248 °F for short periods). The lack of branching may be ensured by an appropriate choice of catalyst and reaction conditions.

Ziegler-Natta catalysts have been used for many years in producing a variety of polyethylenes, including HDPE. These catalysts generally include a magnesium halide support and at least one catalyst compound.

CA 1 128 920 A relates to dual transition metal catalysts exhibiting high activity for the polymerization of alpha-olefins prepared by reacting a tetravalent hydrocarbyloxy titanium halide with chromium oxide and combining the resulting product, preferably in the presence of an inert solid catalyst support, with an organometallic activating agent such as trialkyl aluminum.

US 4 361 685 A relates to alpha-olefins are polymerized in the presence of a catalyst which comprises (A) a zirconium carboxylate, a chromium carboxylate or mixture thereof; (B) a solid catalyst support; (C) an organometallic activating agent or cocatalyst and (D) a trivalent or tetravelent titanium compound.

WO2012/166490 A1 relates to catalyst compositions comprising three or more transition metals effective in increasing catalyst efficiency, reducing polydispersity, and increasing uniformity in molecular weight distribution when used in olefin, and particularly, linear low density polyethylene (LLDPE), polymerizations.

### SUMMARY

Though effective, Ziegler-Natta catalysts are generally limited in their ability to produce differentiated polymers, such as making ethylene-based polymers having very high polymer density or very low polymer density under normal polymerization conditions. Accordingly, there is an ongoing need for procatalysts, catalysts, and processes for producing new, differentiated HDPE polymers. In particular, there is an ongoing need for procatalysts, catalysts, and processes for producing ethylene-based polymers with increased high density fraction (HDF). The present disclosure is directed to procatalysts, catalysts, and processes utilizing these procatalysts and catalysts to produce ethylene-based polymers having increased HDF.

According to at least one embodiment, a procatalyst, comprises: a preformed magnesium chloride catalyst support having a surface area of greater than or equal to 100 $m^2/g$; a titanium containing component; a chlorinating agent; and a hydrocarbon soluble transition metal compound having an oxidation state of greater than or equal to 5+, wherein the hydrocarbon soluble transition metal compound having an oxidation state of greater than or equal to 5+ does not comprise vanadium; wherein the transition metal compound is a metal-ligand complex and

(a) the metal-ligand complex is a metal alkoxide or metal halide having structural formula $MX_{n-b}(OR^2)_b$, where M is a transition metal having an oxidation state "n" that is greater than or equal to 5+ (not including vanadium), X is a halogen, b is from 0 to n, and $R^2$ is $(C_1-C_{20})$ hydrocarbyl or $(C_1-C_{20})$ heterohydrocarbyl; or

(b) the metal ligand complex is a metal oxyalkoxide having structural formula $M(=O)X_{n-b}(OR^2)_b$, where M is the transition metal having an oxidation state n that is greater than or equal to 5+ (not including vanadium), X is a halogen, b is from 0 to n-2, and $R^2$ is $(C_1-C_{20})$ hydrocarbyl or $(C_1-C_{20})$ heterohydrocarbyl.

According to another embodiment, a catalyst comprises:as defined in the claim 11 as appended hereto..

According to another embodiment, a method for preparing a procatalyst as defined in the claim 14 as appended hereto.

Additional features and advantages will be set forth in the detailed description which follows, and in part will be readily apparent to those skilled in the art from that description or recognized by practicing the embodiments described herein, including the detailed description which follows and the claims. It is to be understood that both the foregoing general description and the following detailed description describe various embodiments and are intended to provide an overview or framework for understanding the nature and character of the claimed subject matter.

## DETAILED DESCRIPTION

The term "polymer" refers to a polymeric compound prepared by polymerizing monomers, whether of the same or a different type. The generic term polymer thus embraces the term "homopolymer," usually employed to refer to polymers prepared from only one type of monomer as well as "copolymer," which refers to polymers prepared from two or more different monomers.

"Ethylene-based polymer" shall mean polymers comprising greater than 50% by weight of units that have been derived from ethylene monomer. This includes polyethylene homopolymers or copolymers (meaning units derived from two or more comonomers). Common forms of ethylene-based polymer known in the art include Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m- LLDPE); Medium Density Polyethylene (MDPE); and High Density Polyethylene (HDPE).

As used herein, a "solution polymerization reactor" is a vessel that performs solution polymerization, wherein ethylene monomer, optionally with a comonomer, polymerizes or copolymerizes after being dissolved in a non-reactive solvent that contains a catalyst. Heat may be removed or added to the solution polymerization reactors by coupling the reactors to heat exchangers. In the solution polymerization process, hydrogen may be utilized; however, it is not required in all solution polymerization processes.

Ziegler-Natta catalysts are commonly used to produce ethylene-based polymers in processes for polymerizing ethylene and, optionally, one or more alpha-olefin comonomers. In these polymerization processes comprising typical Ziegler-Natta catalysts, polymer average molecular weight decreases rapidly as polymerization temperature increases. However, high polymerization temperatures in solution polymerization processes increase production throughput and produce ethylene-based polymers with desired properties, such as superior optics and dart/tear balance. Increasing the molecular weight capability of a Ziegler-Natta catalyst may expand its ability to make new products and make it possible to operate at higher polymerization temperatures.

The present disclosure is directed to Ziegler-Natta-type procatalysts and catalysts comprising the procatalyst that exhibit increased molecular weight capability and exhibit the ability to increase the HDF of the ethylene-based polymer. A "procatalyst," as used herein, is a catalyst composition that is basically catalytically inactive before contacting with a cocatalyst and becomes catalytically active once contacting a cocatalyst. The procatalyst disclosed herein includes, in embodiments, a procatalyst comprising: a magnesium chloride catalyst support having a surface area of greater than or equal to 100 $m^2$/g; a titanium containing component; a chlorinating agent; and a hydrocarbon soluble transition metal compound having an oxidation state of greater than or equal to 5+, wherein the hydrocarbon soluble transition metal compound having an oxidation state of greater than or equal to 5+ does not comprise vanadium. Embodiments also include a catalyst comprising the procatalyst and an aluminum alkyl cocatalyst, and include polymerization processes comprising the procatalyst and/or catalyst.

The $MgCl_2$ component may be prepared by selecting an organomagnesium compound or a complex including an organomagnesium compound and reacting the organomagnesium compound with a chloride compound, such as a metallic or non-metallic chloride, under conditions suitable to make the $MgCl_2$ component. Examples of organomagnesium compounds and/or complexes may include, but are not limited to, magnesium $C_2$-$C_8$ alkyls and aryls, magnesium alkoxides and aryloxides, carboxylated magnesium alkoxides, and carboxylated magnesium aryloxides, or combinations of these. In some embodiments, the organomagnesium compound may include a magnesium $C_2$-$C_8$ alkyl, magnesium $C_1$-$C_4$ alkoxides, or combinations thereof. In some embodiments, the organomagnesium compound may be butyl ethyl magnesium.

In one or more embodiments, the $MgCl_2$ components include, for example, the reaction product of a chloride source with a hydrocarbon soluble hydrocarbylmagnesium compound or mixture of compounds. Exemplary organomagnesium compounds include di($C_1$-$C_{20}$)alkylmagnesium or di($C_6$-$C_{20}$)arylmagnesium compounds, particularly di(n-butyl)magnesium, di(sec-butyl)magnesium, diisopropylmagnesium, di-n-hexylmagnesium, isopropyl-n-butyl-magnesium, ethyl-n-hexylmagnesium, ethyl-n-butylmagnesium, di-n-octylmagnesium, and combinations thereof. Exemplary suitable magnesium diaryls include diphenylmagnesium, dibenzylmagnesium and ditolylmagnesium. The organomagnesium compounds may optionally be treated with an organoaluminum compound for improving solubility, reducing solution viscosity, or both improving solubility and reducing solution viscosity. Stabilizers, including those derived from substituted phenol compounds, may also be present. Additional suitable organomagnesium compounds include alkyl- and aryl- magnesium alkoxides, aryloxides and chlorides, as well as mixtures of the foregoing. Highly preferred organomagnesium compounds are the halogen-free organomagnesium compounds.

Among the chloride sources which can be employed in the preparation of $MgCl_2$ components for use herein include metallic chlorides and nonmetallic chlorides, including organo chlorides and hydrogen chloride. Suitable metallic chlorides, which can be employed herein, include a formula according to: $MR_{y-a}Cl_a$, wherein: M is a metal of Groups 13, 14, or 15 of the Periodic Table of Elements; R is a monovalent organic radical; y has a value corresponding to the valence of M, and a has a value from 1 to y.

In one or more embodiments, metallic chlorides may be chosen from alkylaluminum chlorides having the formula: $AlR_{3-a}Cl_a$, wherein: each R is independently $(C_1-C_{10})$hydrocarbyl, preferably $(C_1-C_6)$alkyl, and a is a number from 1 to 3. The akylaluminum chlorides may include, and are not limited to: ethylaluminum sesquichloride, diethylaluminum chloride, and ethylaluminum dichloride, with ethylaluminum dichloride being especially preferred. Alternatively, a metal chloride such as aluminum trichloride or a combination of aluminum trichloride with an alkyl aluminum chloride or a trialkyl aluminum compound may be suitably employed.

Suitable nonmetallic chlorides and organochlorides are represented by the formula $R'Cl_r$ wherein R' is hydrogen or $(C_1-C_{10})$hydrocarbyl or a non-metal such as Si, Ga or Ge; and subscript r is an integer from 1 to 6. Particularly suitable chloride sources include, for example, hydrogen chloride and active organochlorides such as t-alkyl chlorides, sec-alkyl chlorides, allyl chlorides, and benzyl chlorides and other active hydrocarbyl chlorides wherein hydrocarbyl is as defined herein before. By an active organic chloride is meant a hydrocarbyl chloride that contains a labile chloride at least as active, that is, as easily lost to another compound, as the chloride of sec-butyl chloride, preferably as active as t-butyl chloride. In addition to the organic monochlorides, it is understood that organic dichlorides, trichlorides and other polychlorides that are active as defined herein before are also suitably employed. Examples of preferred chloride sources include hydrogen chloride, t-butyl chloride, t-amyl chloride, allyl chloride, benzyl chloride, crotyl chloride, and diphenylmethyl chloride. Most preferred are hydrogen chloride, t-butyl chloride, allyl chloride and benzyl chloride.

The organomagnesium halide can be preformed from the organomagnesium compound and the chloride source and stored for later use or it can be preformed in situ in which instance the procatalyst is preferably prepared by mixing in a suitable solvent or reaction medium (1) the organomagnesium component and (2) the chloride source, followed by the other procatalyst components.

In embodiments, the organomagnesium compound or complex may be soluble in a hydrocarbon diluent, such as an inert hydrocarbon diluent. Examples of hydrocarbon diluents may include, but are not limited to, liquefied ethane, propane, isobutane, n-butane, n-hexane, the various isomeric hexanes, isooctane, paraffinic mixtures of alkanes having from 5 to 30 carbon atoms, cyclohexane, methylcyclopentane, dimethylcyclohexane, dodecane, industrial solvents composed of saturated or aromatic hydrocarbons such as kerosene, naphthas, and combinations thereof. In some embodiments, the hydrocarbon diluent may be substantially free of any impurities, including alkynes, dienes, allenes, and any compounds containing one or more heteroatoms. As used herein, the term "substantially free" of a constituent means that a composition includes less than 0.1 wt.% of the constituent (e.g., impurity, compound, element, etc.). In some embodiments, the hydrocarbon diluent may have a boiling point in the range from about -50 °C to about 200 °C. The hydrocarbon diluent may, in embodiments, include an isoparaffin solvent. Examples of isoparaffin solvents may include, but are not limited to, ISOPAR™ synthetic paraffin solvents available from ExxonMobile (e.g., ISOPAR™ E paraffin solvent), and special boiling point (SBP) solvents by Shell Chemicals (e.g., SBP 100/140 high purity de-aromatised hydrocarbon solvent). Other examples of hydrocarbon diluents may include methylcyclopentane, ethylbenzene, cumene, decalin, and combinations thereof.

The organomagnesium compound may be dispersed in the hydrocarbon diluent to form slurry. The chloride compound may be added to the slurry so that the organomagnesium compound is contacted with the chloride compound to produce the $MgCl_2$. The chloride compound may be a metallic or non-metallic chloride. For example, in some embodiments, the chloride compound may be hydrochloride gas. In embodiments, the organomagnesium compound and the chloride compound may be contacted at a temperature of from -25 °C to 100 °C, or from 0 °C to 50 °C. In some embodiments, heat removal is needed in order to control set reaction temperature within $\pm 5$ °C, such as within $\pm 3$ °C. In some embodiments, the amount of chloride source is controlled in order to achieve a target molar ratio of Cl to Mg in the resulting $MgCl_2$. For example, the molar ratio of Cl to Mg can be from 1.8 to 2.0 for a chloride-deficient $MgCl_2$ support, or from 2.0 to 2.2 for a chloride-rich $MgCl_2$ support. In some embodiments, the slurry of organomagnesium compound and metallic or non-metallic chloride may be contacted for a time of from 1 hour to 12 hours, or from 4 hours to 6 hours. The concentration of the organomagnesium compound in the slurry (*i.e.,* before the chloride compound is added to the slurry) may be sufficient so that when the chloride compound is added to the slurry, the resultant composition may include a concentration of magnesium of from 0.005 moles per liter (mol/L) to 1.000 mol/L.

The reaction of the metallic or non-metallic chloride with the organomagnesium compound produces the $MgCl_2$ component, which may be present in an $MgCl_2$ slurry that includes $MgCl_2$ particles dispersed in the hydrocarbon diluent. In

some embodiments, the MgCl$_2$ slurry is prepared before being treated with other procatalyst component and is referred to herein as a "preformed MgCl$_2$ slurry." In some embodiments, the MgCl$_2$ slurry may have a concentration of MgCl$_2$ of from 0.005 mol/L to 10.00 mol/L, or from 0.05 mol/L to 1.00 mol/L.

In embodiments, the MgCl$_2$ component may be formed by solution precipitation of a hydrocarbon soluble magnesium alkyl precursor with a non-metallic chloride. The magnesium alkyl precursor may, in some embodiments, be a magnesium C$_2$-C$_8$ alkyl precursor. The non-metallic chloride may, in some embodiments, be hydrochloride gas. The hydrocarbon-soluble magnesium alkyl precursor and non-metallic chloride are added to a hydrocarbon diluent-such as, for example, the hydrocarbon diluents listed in this disclosure. The conditions for this precipitation process are the same as those previously disclosed for forming organomagnesium compounds.

The MgCl$_2$ component has, in embodiments, a surface area greater than or equal to 100 meter squared per gram (m$^2$/g), such as a surface area greater than or equal to 150 m$^2$/g, or greater than or equal to 200 m$^2$/g, greater than or equal to 300 m$^2$/g, greater than or equal to 400 m$^2$/g. In some embodiments, the upper limit of the surface area of the MgCl$_2$ component is 800 m$^2$/g.

Following the preparation of the MgCl$_2$ component, the MgCl$_2$ component may be contacted with a chlorinating agent. The chlorinating agent may have a structural formula A(Cl)$_x$(R$^1$)$_{3-x}$ or Si(Cl)$_y$(R$^1$)$_{4-y}$, where R$^1$ is a (C$_1$-C$_{30}$) hydrocarbyl, x is 1, 2, or 3, and y is 1, 2, 3, or 4. In some embodiments, A may be aluminum or boron. Examples of chlorinating agents may include, but are not limited to, aluminum trichloride, methyl aluminum dichloride, dimethylaluminum chloride, ethylaluminum dichloride, diethylaluminum chloride, ethylaluminum sesquichloride, isobutylaluminum dichloride, diisobutylaluminum chloride, boron trichloride, phenylboron dichloride, dicyclohexylboron chloride, silicon tetrachloride, methyltrichlorosilane, dimethyldichlorosilane, chlorotrimethylsilane, ethyltrichlorosilane, dichlorodiethylsilane, chlorotriethylsilane, n-propyltrichlorosilane, dichlorodi(n-propyl)silane, chlorotri(n-propyl)silane, isopropyltrichlorosilane, dichlorodiisopropylsilane, chlorotriisopropylsilane, n-butyltrichlorosilane, dichlorodi(n-butyl)silane, chlorotri(n-butyl)silane, isobutyltrichlorosilane, dichlorodiisobutylsilane, chlorotriisobutylsilane, cyclopentyltrichlorosilane, dichlorodicylcopentylsilane, n-hexyltrichlorosilane, cyclohexyltrichlorosilane, dichlorodicyclohexylsilane, or combinations thereof. In some embodiments, the chlorinating agent is an aluminum alkyl chloride.

The MgCl$_2$ component may be contacted with the chlorinating agent under conditions sufficient to condition the MgCl$_2$ component. In embodiments, the MgCl$_2$ component may be contacted with the chlorinating agent at a temperature of from 0 °C to 50 °C, such as from 0 °C to 35 °C, from 25 °C to 50 °C, or from 25 °C to 35 °C. The MgCl$_2$ component may be contacted with the chlorinating agent for a time of from 4 hours to 24 hours, such as from 4 hours to 12 hours, from 6 hours to 24 hours, or from 6 hours to 12 hours. Not intending to be bound by any theory, it is believed that conditioning the MgCl$_2$ component by contacting the MgCl$_2$ component with the chlorinating agent may facilitate or enhance adsorption of additional metals, such as, for example, a titanium species onto the MgCl$_2$ component. In some embodiments, the procatalyst may include a molar ratio of the chlorinating agent to the MgCl$_2$ component in the heterogeneous procatalyst of from 3:40 to 40:40, such as from 3:40 to 20:40, or from 20:40 to 40:40.

The MgCl$_2$ component may additionally be contacted with a titanium containing component. The titanium containing component may be any titanium compound or complex. In some embodiments, the titanium containing component may include a titanium halide, a titanium alkoxide, or combinations thereof. For example, in embodiments, the titanium containing component may include, but is not limited to, titanium tetrachloride (TiCl$_4$), titanium isopropoxide (TiPT), other titanium halide or titanium alkoxide, Ti(OR)$_4$ where R is C$_1$-C$_{21}$ hydrocarbyl, or combinations thereof.

The MgCl$_2$ component may be contacted with the titanium containing component under conditions so that at least a portion of the titanium containing component is adsorbed onto the MgCl$_2$ component. For example, in embodiments, the MgCl$_2$ component may be contacted with the titanium containing component at a temperature of from 0 °C to 150 °C, such as from 0 °C to 35 °C, from 25 °C to 50 °C, or from 25 °C to 35 °C. In some embodiments, the MgCl$_2$ component may be contacted with the titanium containing component at such temperature for a time of from 3 hours to 24 hours, such as from 3 hours to 12 hours, from 6 hours to 24 hours, or from 6 hours to 12 hours. In some embodiments, the MgCl$_2$ component is contacted with the titanium containing component after the MgCl$_2$ component is conditioned by the chlorinating agent. In other embodiments, the MgCl$_2$ component is contacted with the titanium containing component before the MgCl$_2$ component is contacted with the chlorinating agent. In yet other embodiments, the MgCl$_2$ component may be contacted with the chlorinating agent and the titanium containing component simultaneously by adding the chlorinating agent and the titanium containing component to the MgCl$_2$ slurry at the same time. The chlorinating agent may, in embodiments, react with the titanium containing component as well as the MgCl$_2$ component. For example, the chlorinating agent may react with the titanium in the titanium containing component to form a titanium chloride, such as, for example TiCl$_3$, or TiCl$_4$.

The procatalyst of embodiments also includes a hydrocarbon soluble transition metal compound having an oxidation state of greater than or equal to 5+, where the transition metal compound does not comprise vanadium (hereinafter referred to as the "transition metal compound"). For example, the transition metal compound may be combined with the MgCl$_2$ component and, optionally, one or both of the titanium containing component and the chlorinating agent that are dispersed in the hydrocarbon diluent. The transition metal compound is a metal-ligand complex. Described herein is a transition metal compound having the structural formula (L)$_n$M(XR$^2$)$_b$, where: M is a transition metal in an oxidation state of greater than or equal to 5+, excluding vanadium; each L is a neutral ligand or (=O), each $XR^2$ is an anionic ligand in which X is a heteroatom and $R^2$ is $(C_1-C_{20})$ hydrocarbyl or $(C_1-C_{20})$ heterohydrocarbyl; n is 0 (zero), 1, or 2; and b is 1, 2, 3, or 4. The metal-ligand complex may be overall charge neutral. In embodiments, the metal-ligand complex is soluble in hydrocarbon solvents, such as the hydrocarbon diluents previously discussed in this disclosure. In some embodiments, one or more than one L may be a neutral ligand. In some embodiments, one or more than one L may include a neutral ligand comprising a nitrogen-containing or phosphorous-containing compound, such as, for example, ammonia, nitriles, pyridines, amines, phosphines, or combinations thereof. Examples of neutral ligands may include, but are not limited to, acetonitrile, pyridine, ammonia, ethylenediamine, triphenylphosphine, other neutral ligands, or combinations thereof. In some embodiments, one or more than one L may be an oxo group (=O). In some embodiments, X may be oxygen.

. In embodiments, the metal-ligand complex is a metal alkoxide or metal halide having structural formula $MX_{n-b}(OR^2)_b$, where M is a transition metal having an oxidation state "n" that is greater than or equal to 5+ (not including vanadium), X is a halogen, b can be from 0 to n, and $R^2$ is $(C_1-C_{20})$ hydrocarbyl or $(C_1-C_{20})$ heterohydrocarbyl. In other embodiments, the metal ligand complex is a metal oxyalkoxide having structural formula $M(=O)X_{n-b}(OR^2)_b$, where M is the transition metal having an oxidation state n that is greater than or equal to 5+ (not including vanadium), X is a halogen, b can be from 0 to n-2, and $R^2$ is $(C_1-C_{20})$ hydrocarbyl or $(C_1-C_{20})$ heterohydrocarbyl.

In some embodiments, the transition metal compound, such as M in the metal ligand previously discussed, may be a transition metal selected from the group consisting of molybdenum (Mo), niobium (Nb), tantalum (Ta), tungsten (W), iron (Fe), zirconium (Zr), chromium (Cr), manganese (Mn), zinc (Zn), and combinations thereof, each having an oxidation state of greater than or equal to 5+. The transition metal compound does not comprise vanadium.

In embodiments, the transition metal compound may be combined with the slurry comprising the $MgCl_2$ component, before or after either of the titanium containing component and the chlorinating agent are dispersed in the slurry comprising the $MgCl_2$ component. In some embodiments, the transition metal compound may be combined with the slurry comprising the $MgCl_2$ component-that optionally comprises the titanium containing component and/or the chlorinating agent-and mixed for a period of from 0.5 minutes to 24 hours, such as from 30 minutes to 12 hours.

As discussed in this disclosure, the procatalyst comprises four components: (A) a titanium containing component; (B) a chlorinating agent; (C) a transition metal compound having an oxidation state greater than or equal to 5+, excluding vanadium; and (D) an $MgCl_2$ component having a surface area or greater than or equal to 100 $m^2$/g. In embodiments, components (A), (B), and (C) may be added to component (D) separately and in any order. In other embodiments, components (A), (B), and (C) may be added to component (D) in any combination and in any order, such as, for example, The addition sequence of components of (A), (B), and (C) to (D) may be adding (B), then adding (C), and then adding (A), or adding (B), then adding (A), and then adding (C). It should be understood that components (A), (B), and (C) may be added to component (D) in various other temporal combinations. Thus, in embodiments, at least one of components (A), (B), and (C) may be added to component (D) temporally separate from at least one other of components (A), (B), and (C).

Components (A), (B), (C), and (D) may be present in the procatalyst in various ratios. In embodiments a molar ratio of the transition metal present in the transition metal compound to the titanium present in the titanium containing compound (*i.e.*, transition metal (mol)/Ti (mol)) is from 0.1 to 10.0, such as from 0.2 to 5.0, or from 0.5 to 3.0. In embodiments, a molar ratio of the chlorinating agent to the titanium present in the titanium containing component (*i.e.,* chlorinating agent (mol)/Ti (mol)) is from 0.5 to 100.0, such as from 2.0 to 50.0, or from 5.0 to 20.0. In embodiments, a molar ratio of the $MgCl_2$ component to the titanium present in the titanium containing component (*i.e.*, $MgCl_2$ (mol)/Ti (mol)) is from 1.0 to 100.0, such as from 8.0 to 80.0, or from 15.0 to 50.0.

In embodiments, a cocatalyst may be combined with the procatalyst described herein to produce a catalyst system. The cocatalyst may include at least one organometallic compound such as an alkyl or haloalkyl of aluminum, an alkylaluminum halide, a Grignard reagent, an alkali metal aluminum hydride, an alkali metal borohydride, an alkali metal hydride, an alkaline earth metal hydride, or the like. In some embodiments, the cocatlyst is an alkyl of aluminum. The formation of the catalyst system from reaction of the procatalyst and the cocatalyst may be carried out *in situ* (in place), or just prior to entering the polymerization reactor. Thus, the combination of the procatalyst and the cocatalyst may occur under a wide variety of conditions. Such conditions may include, for example, contacting the procatalyst and cocatalyst under an inert atmosphere such as nitrogen, argon, or other inert gas at temperatures of from 0 °C to 250 °C, such as from 0 °C to 200 °C, from 15 °C to 250 °C, or from 15 ° to 200 °C. In the preparation of the catalytic reaction product (*i.e.,* catalyst system), it is not necessary to separate hydrocarbon soluble components from hydrocarbon insoluble components. In some embodiments, the procatalyst and cocatalyst may be introduced into a reactor simultaneously and contact each other inside the reactor. In some embodiments, the catalyst system may have a molar ratio of the cocatalyst to the titanium species in the titanium containing component of the procatalyst of from 3:1 to 20:1, such as from 3:1 to 15:1, from 3:1 to 10:1, from 3:1 to 8:1, from 5:1 to 20:1, from 5:1 to 15:1, from 5:1 to 10:1, from 8:1 to 20:1, or from 8:1 to 15:1.

Once the catalyst system including the procatalyst and cocatalyst has been prepared, the catalyst system may be used in a polymerization or copolymerization process for polymerizing olefins. For example, in some embodiments, the catalyst system may be utilized in a polymerization or copolymerization process to make ethylene-based polymers, such as, for example, HDPE and linear low density polyethylene (LLDPE). In some embodiments, a polymerization or copolymerization process may include contacting ethylene monomers and optionally one or more $\alpha$-olefin comonomers with the catalyst system comprising the procatalyst and, optionally, a cocatalyst to form an ethylene-based polymer. The olefin polymerization/copolymerization reaction may be conducted in a reaction medium. The reaction medium may be a hydrocarbon diluent, such as an isoparaffin, an aliphatic hydrocarbon, or any of the other hydrocarbon diluents previously described in this disclosure. The olefin polymerization/copolymerization process may include contacting the olefin or a combination of olefins with the reaction medium in the presence of the catalyst system, which includes the procatalyst composition and, optionally, the cocatalyst. Conditions for the polymerization may be any that are suitable, and a molecular weight regulator, such as, for example, hydrogen may also be present in the reaction vessel to suppress formation of undesirably high molecular weight polymers.

Any ethylene polymerization or copolymerization reaction process may be employed with the catalyst disclosed herein to produce the ethylene-based polymers. Such ethylene polymerization or copolymerization reaction processes may include, but are not limited to, slurry phase polymerization processes, solution phase polymerization processes, gas phase processes, and combinations thereof. The polymerization or copolymerization process may be performed within one or more conventional reactors, examples of which may include, but are not limited to, loop reactors, stirred tank reactors, batch reactors in parallel or in series, and/or any combinations thereof. In some embodiments, the polymerization process may be performed in two or more reactors in series, parallel, or combinations thereof. In other embodiments, the polymerization process may be conducted in a single reactor. The polymerization process may be a batch polymerization process or a continuous polymerization process. For example, in some embodiments, the polymerization process may be a batch polymerization process, which may be conducted in a stirred tank reactor. In some embodiments, the polymerization process may be continuous, such as a polymerization reaction conducted in a continuous solution polymerization reactor. In other embodiments, the polymerization process may include two or more polymerization steps. In these embodiments, the catalyst system comprising the procatalyst disclosed herein may be used for any one or a plurality of the polymerization steps.

The polymers produced from polymerization/copolymerization processes utilizing the procatalyst and/or catalyst disclosed herein may be homopolymers of $C_2$-$C_{20}$ $\alpha$-olefins, such as ethylene, propylene, or 4-methyl-1-pentene. In some embodiments, the polymers formed in the presence of the procatalyst and/or catalyst disclosed herein may include interpolymers of ethylene or propylene with at least one or more $\alpha$-olefins comonomers, $C_2$-$C_{20}$ acetylenically unsaturated comonomers, and/or $C_4$-$C_{18}$ diolefin comonomers. In some embodiments, the polymers may be ethylene-based polymers, such as interpolymers of ethylene with at least one of the above $C_3$-$C_{20}$ $\alpha$-olefins, diolefins, and/or acetylenically unsaturated comonomers in combination with other unsaturated comonomers. In some embodiments, the comonomer may be an $\alpha$-olefin comonomer having no more than 20 carbon atoms. For example, in some embodiments, the $\alpha$-olefin comonomer may have from 3 to 20 carbon atoms, from 3 to 10 carbon atoms, or from 3 to 8 carbon atoms. Exemplary $\alpha$-olefin comonomers may include, but are not limited to, propylene, 1-butene, 1-pentene, 1-hexene, 1-heptene, 1-octene, 1-nonene, 1-decene, and 4-methyl-1-pentene. In some embodiments, the ethylene-based polymers may include an $\alpha$-olefin comonomer selected from the group consisting of 1-butene, 1-hexene, and 1-octene. In some embodiments, the ethylene-based polymers produced in the presence of the procatalyst and/or catalyst systems disclosed herein may be interpolymers of ethylene monomer units and comonomer units chosen from 1-butene, 1-hexene, 1-octene, or combinations of these.

In some embodiments, a solution polymerization/copolymerization process is used. Polymerization is effected by adding a catalytic amount of the procatalyst and/or catalyst to a polymerization reactor containing the selected $\alpha$-olefin monomers (e.g., ethylene and/or one or more $\alpha$-olefin comonomers), or vice versa. The polymerization reactor may be maintained at a temperature of from 60 °C to 300 °C. For example, in some embodiments, the polymerization reactor may be maintained at temperatures of from 150 °C to 230 °C, such as from 150 °C to 200 °C, from 180 °C to 300 °C, from 180 °C to 230 °C, or from 180 °C to 200 °C. In some embodiments, the reactants, catalyst system, or both may have a residence time in the polymerization reactor of from 5 minutes to 20 minutes. In some embodiments, the residence time may be 30 minutes to 4 hours. Longer or shorter residence times may alternatively be employed.

In some embodiments, the polymerization/copolymerization process may be conducted at pressures that are relatively low, such as pressures of from 150 to 3,000 psig (1.0 to 20.7 MPa), such as from 250 to 1,000 psig (1.7 to 6.9 MPa), or from 450 to 800 psig (3.1 to 5.5 MPa). However, polymerization/copolymerization in the presence of the procatalyst and/or catalyst described herein may be conducted at pressures from atmospheric pressure to pressures determined by the capabilities (e.g., pressure rating) of the polymerization equipment.

In some embodiments, the polymerization/copolymerization process may include a carrier, which may be an inert organic diluent, excess monomer, or both. Oversaturation of the carrier with the polymer may be generally avoided during the polymerization/copolymerization process. If such saturation of the carrier with the polymer occurs before the catalyst system becomes depleted, the full efficiency of the catalyst system may not be realized. In some embodiments, the polymerization/copolymerization process may be operated at conditions sufficient to maintain the amount of polymer in the carrier/diluent at a concentration less than an oversaturation concentration of the polymer. For example in some embodiments, the polymerization/copolymerization process may be operated at conditions sufficient to maintain the amount of the polymer in the carrier/diluent less than 30 weight percent (wt.%), based on the total weight of the reaction mixture. In some embodiments, the polymerization/copolymerization process may include mixing or stirring the reaction mixture to maintain temperature control and enhance the uniformity of the polymerization reaction throughout the polymerization zone. In some embodiments, such as with more rapid reactions with relatively active catalysts, the polymerization/copolymerization process may include refluxing monomer and diluent, if diluent is included, thereby removing at least some of the heat of reaction. In some embodiments, heat transfer equipment (e.g., heat exchangers, cooling jackets, or other heat transfer means) may be provided for removing at least a portion of the exothermic heat of polymerization.

In some embodiments, the reaction mixture added to the polymerization/copolymerization process may include an amount of ethylene monomer sufficient to maintain reactor stability and increase catalyst efficiency. In some embodiments, the reaction mixture may have a molar ratio of diluent to ethylene monomer of from 1:2 to 1:8, such as from 1:2 to 1:5, from 1:3 to 1:8, or from 1:3 to 1:5. In some embodiments, a portion of excess ethylene monomer may be vented from the polymerization process to maintain the concentration of ethylene monomer in the reactor.

In some embodiments, the polymerization/copolymerization process may include contacting hydrogen gas with the reaction mixture during the reaction. The hydrogen gas may be operable to reduce formation of ultra-high molecular weight molecules of the ethylene-based polymer. In some embodiments, a concentration of the hydrogen gas in the reaction mixture may be maintained at from 0.001 to 1.000 mole of hydrogen per mole of monomer, where the monomer includes the ethylene monomer and any optional $\alpha$-olefin comonomers. The hydrogen may be added to the polymerization reactor with a monomer stream, as a separate hydrogen feed stream, or both. The hydrogen may be added to the polymerization reactor before, during, and/or after addition of the monomer to the polymerization reactor. In some embodiments, the hydrogen may be added either before or during addition of the catalyst system.

The resulting ethylene-based polymer may be recovered from the polymerization mixture by driving off unreacted monomer, comonomer, diluent, or combinations thereof. In some embodiments, no further removal of impurities may be required. The resultant ethylene-based polymer may contain small amounts of catalyst residue. The resulting ethylene-based polymer may further be melt screened. For example, the ethylene-based polymer may be melted within an extruder and then passed through one or more active screens, positioned in series, with each active screen having a micron retention size of from 2 micrometers ($\mu$m) to about 400 $\mu$m, such as from 2 $\mu$m to about 300 $\mu$m, or from 2 $\mu$m to about 70 $\mu$m. During melt screening, the mass flux of the ethylene-based polymer may be from 5 to about 100 lb/hr/in$^2$ (1.0 to about 20.0 kg/s/m$^2$).

The resulting ethylene-based polymers produced with the procatalyst and/or catalyst disclosed herein may exhibit increased HDF compared to ethylene-based polymers that were not prepared in the presence of the procatalyst and/or catalyst disclosed herein. The HDF content may be determined in accordance with the test methods described in this disclosure. As used herein, the term "comparative polymer" refers to a polymer prepared by a comparative polymerization process in which an ethylene based polymer is polymerized in the presence of a comparative catalyst system. The comparative catalyst system comprises a comparative procatalyst composition in place of the procatalyst described herein, except that it does not contain the hydrocarbon soluble transition metal compound having an oxidation state of greater than or equal to 5+.

In some embodiments, the ethylene-based polymers produced in the presence of the procatalyst and/or catalyst disclosed herein may have an HDF determined in accordance with the test methods described herein of at least 25% greater than an HDF of a comparative polymer (HFD change). In some embodiments, the ethylene-based polymers produced by a process comprising the catalyst system disclosed herein may have a HDF of at least 30% greater than the HDF of a comparative polymer (HFD change), such as at least 35% greater than the HDF of a comparative polymer.

The efficiency of the catalyst in producing the ethylene-based polymer is, in embodiments, from 100 kg polymer/g Ti to 1500 kg polymer/g Ti, such as from 175 kg polymer/g Ti to 425 kg polymer/g Ti, from 200 kg polymer/g Ti to 400 kg polymer/g Ti, from 225 kg polymer/g Ti to 375 kg polymer/g Ti, or from 250 kg polymer/g Ti to 350 kg polymer/g Ti.

The molecular weight of the ethylene-based polymer produced according to embodiments, as measured by gel permeation chromatography (GPC). In some embodiments, the ethylene-based polymers produced in the presence of the procatalyst and/or catalyst disclosed herein may have a Mw determined in accordance with the test methods described herein of at least 2% greater than a Mw of a comparative polymer (Mw change), or at least 5%, or at least 7%.

The ethylene-based polymers produced in the presence of the procatalyst and/or catalyst disclosed herein may further include additional components such as other polymers and/or additives. Examples of additives may include, but are not limited to, antistatic agents, color enhancers, dyes, lubricants, fillers, pigments, primary antioxidants, secondary antioxidants, processing aids, UV stabilizers, and combinations thereof. In some embodiments, antioxidants, such as IRGAFOS™ 168 and IRGANOX™ 1010 available from Ciba Geigy, may be used to protect the ethylene-based polymer compositions from thermal and/or oxidative degradation. The ethylene-based polymers may contain any amount of the additives. For example, in some embodiments, the ethylene-based polymers may include from 0.0 wt.% to 10.0 wt.%, such as from 0.0 wt.% to 7.0 wt.%, from 0.0 wt.% to 5.0 wt.%, from 0.0 wt.% to 3.0 wt.%, from 0.0 wt.% to 2.0 wt.%, from 0.0 wt.% to 1.0 wt.%, or even from 0.0 wt.% to 0.5 wt.% additives based on the total weight of the ethylene-based polymer compositions including such additives.

The ethylene-based polymers produced in the presence of the catalyst systems disclosed herein may be included in a wide variety of products including, in embodiments, LLDPE, but also high density polyethylenes (HDPE), plastomers, medium density polyethylenes, and polypropylene copolymers. For these and other applications, articles may be prepared showing enhanced overall quality due to the increased average molecular weight and high-density fraction of the ethylene-based polymer. Useful forming operations for the polymers may include, but are not limited to, film, sheet, pipe, and fiber extrusion and co-extrusion as well as blow molding, injection molding, and rotary molding may be pursued. Films may include blown or cast films formed by co-extrusion or by lamination and may be useful as shrink film, cling film, stretch film, sealing film, oriented film, snack packaging, heavy duty bags, grocery sacks, baked and frozen food packaging, medical packaging, industrial liners, agricultural film applications, and membranes, for example, in food-contact and non-food-contact applications. Fibers may include melt spinning, solution spinning, and melt blown fiber operations for use in woven and non-woven form to make filters, diaper fabrics, medical garments, and geotextiles. Extruded articles may include medical tubing, wire and cable coatings, geomembranes, and pond liners. Molded articles may include single and multi-layered constructions in the form of bottles, tanks, large hollow articles, rigid food containers, and toys.

## TEST METHODS

### Density

Density is measure in accordance with ASTM D792 and reported in grams/cubic centimeter (g/cc or $g/cm^3$).

### Melt Index

Melt index ($I_2$), is measured in accordance with ASTM D1238, under conditions of 190 °C and 2.16 kg of load. Melt Flow Index ($I_2$) was obtained with a CEAST 7026 or an Instron MF20 instrument. The instruments followed ASTM D1238, Methods E and N. The melt index ($I_2$) is reported in grams eluted per 10 minutes (g/10 min). The melt index $I_2$ was used for polymer characterization. A higher $I_2$ value may generally correlates to a lower Mw.

### Gel Permeation Chromatography (GPC)

The weight average molecular weight (Mw) of the ethylene-based polymers are measured with GPC. The polymer sample is dissolved by adding the polymer sample to 1,2,4-trichlorobenzene (TCB) at a concentration of 10 mg/mL and heating the mixture for 120 minutes at 160 °C. The solution includes 300 parts per million by weight (ppmw) of butylated hydroxytoluene (BHT) to stabilize the solution. Each sample was then diluted to 1 milligram per milliliter (mg/mL) immediately before the injection of a 250 microliter ($\mu$L) aliquot of the sample. The chromatograph was equipped with two Polymer Labs PLgel 10 $\mu$m MIXED-B columns (300 millimeters (mm) x 10 mm), which are operated at a flow rate of 2.0 mL/minute and a temperature of 160 °C. Sample detection is performed with a PolymerChar IR4 detector in concentration mode. A conventional calibration of narrow polystyrene (PS) standards was utilized with apparent units adjusted to homo-polyethylene (PE) using known Mark-Houwink coefficients for PS and PE in TCB at this temperature.

### High Density Fraction (HDF)

Improved comonomer content distribution (iCCD) analysis was performed with a Crystallization Elution Fractionation (CEF) instrument (PolymerChar, Spain) equipped with an IR-5 detector (PolymerChar, Spain) and two angle light scattering detectors (*e.g.,* Model 2040 detectors from Precision Detectors, currently Agilent Technologies). A guard column that includes 20-27 micron glass (MoSCi Corporation, USA) packed into a 10 centimeter (cm) (length) by ¼ inch (6.35 mm) inner diameter (ID) stainless column is installed just before IR-5 detector in the detector oven. Ortho-dichlorobenzene (oDCB, 99% anhydrous grade or technical grade) is distilled before use. Silica gel 40 (Aldrich, high purity grade, 35-70 mesh) is used to further dry oDCB. The silica gel is dried in a vacuum oven at 160 °C for about two hours before use. The silica gel 40 is packed into three 300 mm x 7.5 mm GPC size stainless steel columns. The Silica gel 40 columns are installed at the inlet of the pump of the CEF instrument. CEF instrument is equipped with an autosampler with $N_2$ purging capability. oDBC is sparged with dried nitrogen ($N_2$) continuously and for at least one hour before use.

Sample preparation is done with an autosampler at 3.6 mg/ml (unless otherwise specified) under shaking at 160 °C for 2 hours. The injection volume is 300 $\mu$l. The temperature profile of iCCD is: stabilization at 105 °C, crystallization at a cooling rate of 3 °C/min from 105 °C to 30 °C, the thermal equilibrium at 30 °C for 3 minutes (including Soluble Fraction Elution Time being set as 2 minutes), elution at a heating rate of 3 °C/min from 30 °C to 140 °C. The flow rate during crystallization is 0.0 mL/min. The flow rate during elution is 0.50 ml/min. The data is collected at one data point/second. The iCCD column is packed with Bright 7GNM8-NiS (Bright 7GNM8-NiS) in a 15 cm (length) by ¼ inch (6.35 mm) ID stainless tubing according to the reference (Cong et al., US78203, 2015). Column temperature calibration is performed by with a mixture of the Reference Material Linear homopolymer polyethylene 38-4 (1.0 mg/ml) and Eicosane (2 mg/ml) in oDCB. The molecular weight of polymer and the molecular weight of the polymer fractions was determined directly from LS detector (90 degree angle) and concentration detector (IR-5) according Rayleigh-Gans-Debye approximation (Striegel and Yau, Modern Size Exclusion Liquid Chromatogram, Page 242 and Page 263) by assuming the form factor of 1 and all the virial coefficients equal to zero. Baselines are subtracted from LS, and concentration detector chromatograms. For the whole resin, integration windows are set to integrate all the chromatograms in the elution temperature (temperature calibration is specified above) range from 23.0 °C to 120 °C. The weight percentage of the high density fraction of the resin (HDF) is defined by the following Equation 1 (EQU. 1):

$$HDF = \frac{(integrated\ area\ of\ elution\ window\ 94-115\ °C)}{(integrated\ area\ of\ entire\ elution\ window\ 20-115\ °C)} \times 100\% \qquad \text{EQU. 1}$$

Catalyst efficiency is calculated based on the amount of ethylene consumed during the polymerization per g of Ti used in the procatalyst composition (g/g Ti).

**EXAMPLES**

Embodiments of the present disclosure will be further clarified by the following examples.

**Procatalyst Preparation**

$MgCl_2$ slurry is prepared according to description in the "Magnesium halide support" section in WO2018005821A1.

All procatalyst preparations were performed within a nitrogen-purged glovebox. Preparations involved sequential room temperature additions (with stirring) of stock solutions of procatalyst components in hexane (0.25 M) to a $MgCl_2$ slurry (0.2 M in Isopar-E). Procatalyst components were added to $MgCl_2$ in the order of $Et_2AlCl$, transition metal component Reagent X (if any), and Ti compounds ($TiCl_4$ or TiPt). The reaction time for each reaction step is about 12 hours. For example, procatalyst (12 Al; 1 Ti; 2 Zn) in Example 2 was prepared by adding $EtAlCl_2$ to $MgCl_2$ slurry. After stirring at room temperature for 12 hours, a hexane solution of zinc 2-ethylhexanoate ($Zn(EHA)_2$; ~80% in mineral spirit) obtained from STREM Chemical, Inc. was added. After the reaction was allowed to proceed at room temperature with agitation for another 12 hours, a $TiCl_4$ solution was introduced to the mixture and the content was stirred overnight at room temperature to yield the procatalyst. The molar ratio of the individual reagents (relative to 40 equivalents of Mg) are listed in following tables.

**Batch Polymerization of Ethylene/Octene**

Solution batch ethylene/1-octene polymerizations were carried out in a stirred one-gallon reactor, which was charged with 250 g of 1-octene ($C_8$) and 1330 g of Isopar-E. The reactor was heated to 190 °C and then saturated with ethylene (450 psig) in the presence of hydrogen (40 mmol). The catalyst premix and cocatalyst (triethylaluminum, TEA; TEA/Ti = 15 for Table 1 and TEA/Ti = 10 for Table 2) were mixed briefly (1-5 min) in an overhead shot tank before injection to the reactor. The polymerization was allowed to proceed for 10 minutes during which time the ethylene pressure was maintained via on-demand ethylene feed. After which time the bottom valve was opened and the contents transferred to a glass kettle and mixed with an antioxidant solution (1 mL of toluene containing 0.1g IRGAFOS 168 (manufactured by BASF Corporation) and 0.05 g of IRGANOX 1010 (manufactured by BASF Corporation)). The contents were poured onto a Mylar lined pan, cooled, and allowed to stand in a hood overnight. The resin was then dried in a vacuum oven at 60 °C for 48 hr. Catalyst loadings typically ranged from 1-3 micromoles Ti.

Table 1

| Example | Procatalyst | EtAlCl$_2$/ 40 Mg | X /40 Mg | X Reagent | TiCl$_4$ /40 Mg | Efficiency (kg polymer/g Ti) | Mw (GPC) | Mw Change (%)* | HDF (iCCD) | HDF Change (%)* |
|---|---|---|---|---|---|---|---|---|---|---|
| Comp. 1 | 12 Al; 1 Ti | 12 | 0 | None | 1 | 273 | 93,402 | 0 | 15% | 0 |
| Comp. 2 | 12 Al; 1 Ti; 2 Zn | 12 | 2 | Zn(EHA)$_2$ | 1 | 529 | 90,142 | -3.5 | 9% | -40 |
| Comp. 3 | 12 Al; 1 Ti; 2 Mn | 12 | 2 | Mn(EHA)$_2$ | 1 | 530 | 80,480 | -13.8 | 10% | -33 |
| Comp. 4 | 12 Al; 1 Ti; 2 Cr | 12 | 2 | Cr(EHA)$_3$ | 1 | 467 | 78,924 | -15.5 | 10% | -33 |
| Comp. 5 | 12 Al; 1 Ti; 2 Zr a | 12 | 2 | Zr(EHA)$_4$ | 1 | 372 | 93,111 | -0.3 | 10% | -33 |
| Comp. 6 | 12 Al; 1 Ti; 2 Zr b | 12 | 2 | Zr(O$^i$Pr)$_4$ | 1 | 568 | 91,843 | -1.7 | 11% | -27 |
| Comp. 7 | 12 Al; 1 Ti; 2 Fe | 12 | 2 | Fe(OEt)$_3$ | 1 | 505 | 84,622 | -9.4 | 10% | -33 |
| Ex. 1 | 12 Al; 1 Ti; 2 Mo | 12 | 2 | Mo(OEt)$_5$ | 1 | 252 | 100,674 | +7.8 | 22% | +47 |
| Ex. 2 | 12 Al; 1 Ti; 2 Nb | 12 | 2 | Nb(O$^n$Bu)$_5$ | 1 | 437 | 103,682 | +11.0 | 21% | +40 |
| Ex. 3 | 12 Al; 1 Ti; 2 Ta | 12 | 2 | Ta(O$^n$Bu)$_5$ | 1 | 395 | 96,487 | +3.3 | 20% | +33 |

*Percentage of change in Mw or HDF over baseline procatalyst containing the same level of Ti but without transition metal component

As shown in Table 1 above, many transition metal compounds having an oxidation state of less than or equal to 4+ caused polymer molecular weight and HDF content to decrease (see Comp. 1 vs. Comp. 2 - 7). In contrast, compounds with oxidation state of 5 or higher, i.e., Mo(OEt)$_5$, Nb(O$^n$Bu)$_5$ and Ta(O$^n$Bu)$_5$, increased polymer molecular weight (c.f, Ex. 1 -3 and Comp. 1) and HDF content.

Table 2

| | | Procatalyst Component | | | | Polymerization Results | | | | |
|---|---|---|---|---|---|---|---|---|---|---|
| Example | Procatalyst | EtAlCl$_2$/40 Mg | X /40 Mg | X Reagent | TiPt /40 Mg | Efficiency (kg polymer/g Ti) | Mw (GPC) | Mw Change (%)* | HDF (iCCD) | HDF Change (%)* |
| Comp. 9 | 12 Al; 1 TiPt | 12 | 1 | 0 | None | 434 | 85,115 | 0 | 19% | 0 |
| Ex. 4 | 12 Al; 1 TiPt; 2 W | 12 | 1 | 2 | WCl$_6$ | 181 | 92,720 | +8.9 | 31% | +63 |

*Percentage of change in Mw or HDF over baseline procatalyst containing the same level of Ti but without transition metal component

TiPt = titanium isopropoxide

As shown in Table 2, WCl$_6$ increased polymer molecular weight and HDF, and the effects of transition metal compounds of high oxidation state was also demonstrated in a procatalyst formulation with Ti(OiPr)$_4$ as Ti source instead of TiCl$_4$ as shown in Ex. 1 - 3.

## Claims

1. A procatalyst, comprising:

   a preformed magnesium chloride catalyst support having a surface area of greater than or equal to 100 m$^2$/g;
   a titanium containing component;
   a chlorinating agent; and
   a hydrocarbon soluble transition metal compound having an oxidation state of greater than or equal to 5+, wherein the hydrocarbon soluble transition metal compound having an oxidation state of greater than or equal to 5+ does not comprise vanadium;
   wherein the transition metal compound is a metal-ligand complex and

   (a) the metal-ligand complex is a metal alkoxide or metal halide having structural formula MX$_{n-b}$(OR$^2$)$_b$, where M is a transition metal having an oxidation state "n" that is greater than or equal to 5+ (not including vanadium), X is a halogen, b is from 0 to n, and R$^2$ is (C$_1$-C$_{20}$) hydrocarbyl or (C$_1$-C$_{20}$) heterohydrocarbyl; or
   (b) the metal ligand complex is a metal oxyalkoxide having structural formula M(=O)X$_{n-b}$(OR$^2$)$_b$, where M is the transition metal having an oxidation state n that is greater than or equal to 5+ (not including vanadium), X is a halogen, b is from 0 to n-2, and R$^2$ is (C$_1$-C$_{20}$) hydrocarbyl or (C$_1$-C$_{20}$) heterohydrocarbyl.

2. The procatalyst of claim 1, wherein the hydrocarbon soluble transition metal compound having an oxidation state of greater than or equal to 5+ is an aliphatic hydrocarbon soluble transition metal compound having an oxidation state of greater than or equal to 5+.

3. The procatalyst of any one of claims 1 and 2, wherein the preformed magnesium chloride catalyst support has a surface area of greater than or equal to 150 m$^2$/g and/or wherein the preformed magnesium chloride catalyst support is a MgCl$_2$ slurry in a hydrocarbon solvent.

4. The procatalyst of claim 3, wherein the MgCl$_2$ slurry is a reaction product of an alkylmagnesium compound solution in a hydrocarbon solvent and a chloride source without separation of the hydrocarbon solvent.

5.  The procatalyst of any one of claims 1 to 4, wherein the titanium containing component is titanium chloride, and/or wherein the titanium containing component is $TiCl_4(OR)_{x-4}$, where R is $C_1$-$C_{21}$ hydrocarbyl, or combinations thereof, x = 0, 1, 2, 3, or 4.

6.  The procatalyst of any one of claims 1 to 5, wherein the chlorinating agent is an aluminum alkyl chloride.

7.  The procatalyst of any one of claims 1 to 6, wherein the hydrocarbon soluble transition metal compound having an oxidation state of greater than or equal to 5+ comprises a member selected from the group consisting of molybdenum, niobium, tantalum, tungsten, and combinations thereof.

8.  The procatalyst of any one of claims 1 to 7, wherein a molar ratio of transition metals present in the hydrocarbon soluble transition metal compound having an oxidation state of greater than or equal to 5+ to titanium present in the titanium containing compound is from 0.1 to 10.0.

9.  The procatalyst of any one of claims 1 to 8, wherein a molar ratio of the chlorinating agent to titanium present in the titanium containing component is from 0.5 to 100.0.

10. The procatalyst of any one of claims 1 to 9, wherein a molar ratio of the a preformed magnesium chloride catalyst support having a surface area of greater than or equal to 100 $m^2$/g to titanium present in the titanium containing component is from 1.0 to 100.0.

11. A catalyst comprising:

    the procatalyst of any one of claims 1 to 10; and
    an aluminum alkyl cocatalyst.

12. A process for polymerizing ethylene-based polymers, the process comprising contacting ethylene and optionally one or more α-olefins in the presence of the catalyst of claim 11.

13. The process for polymerizing ethylene-based polymers according to claim 12, wherein the polymerization process is a solution polymerization process.

14. A method for preparing the procatalyst of claim 1, comprising mixing: (A) the titanium containing component, (B) the chlorinating agent, and (C) the hydrocarbon soluble transition metal compound having an oxidation state of greater than or equal to 5+; to the preformed magnesium chloride catalyst support having a surface area of greater than or equal to 100 $m^2$/g, wherein the hydrocarbon soluble transition metal compound having an oxidation state of greater than or equal to 5+ does not comprise vanadium.

15. The method of claim 14, wherein at least one of (A), (B), or (C) is added to the preformed magnesium chloride catalyst support temporally separate from at least one other of (A), (B), or (C).

**Patentansprüche**

1.  Prokatalysator, umfassend:

    ein vorgeformter Magnesiumchlorid-Katalysatorträger mit einer Oberfläche von mehr als oder gleich 100 $m^2$/g;
    eine titanhaltige Komponente;
    ein Chlorierungsmittel; und
    eine kohlenwasserstofflösliche Übergangsmetallverbindung mit einer Oxidationsstufe von größer als oder gleich 5+, wobei die kohlenwasserstofflösliche Übergangsmetallverbindung mit einer Oxidationsstufe von größer als oder gleich 5+ kein Vanadium umfasst;
    wobei die Übergangsmetallverbindung ein Metall-Liganden-Komplex ist und

    (a) der Metall-Liganden-Komplex ein Metallalkoxid oder Metallhalogenid mit der Strukturformel $MX_{n-b}(OR^2)_b$ ist, wobei M ein Übergangsmetall mit einer Oxidationsstufe "n" von größer als oder gleich 5+ (ohne Vanadium) ist, X ein Halogen ist, b einen Wert von 0 bis n hat und $R^2$ ($C_1$-$C_{20}$)-Hydrocarbyl oder

$(C_1-C_{20})$-Heterohydrocarbyl ist; oder

(b) der Metall-Liganden-Komplex ein Metalloxyalkoxid mit der Strukturformel $M(=O)X_{n-b}(OR^2)_b$ ist, wobei M das Übergangsmetall mit einer Oxidationsstufe "n" von größer als oder gleich 5+ (ohne Vanadium) ist, X ein Halogen ist, b einen Wert von 0 bis n-2 hat und $R^2$ $(C_1-C_{20})$-Hydrocarbyl oder $(C_1-C_{20})$-Heterohydrocarbyl ist.

2. Prokatalysator nach Anspruch 1, wobei die kohlenwasserstofflösliche Übergangsmetallverbindung mit einer Oxidationsstufe von größer als oder gleich 5+ eine aliphatische kohlenwasserstofflösliche Übergangsmetallverbindung mit einer Oxidationsstufe von größer als oder gleich 5+ ist.

3. Prokatalysator nach einem der Ansprüche 1 und 2, wobei der vorgeformte Magnesiumchlorid-Katalysatorträger eine Oberfläche von größer als oder gleich 150 m$^2$/g aufweist und/oder wobei der vorgeformte Magnesiumchlorid-Katalysatorträger eine $MgCl_2$-Aufschlämmung in einem Kohlenwasserstofflösungsmittel ist.

4. Prokatalysator nach Anspruch 3, wobei die $MgCl_2$-Aufschlämmung ein Reaktionsprodukt einer Lösung einer Alkylmagnesiumverbindung in einem Kohlenwasserstofflösungsmittel und einer Chloridquelle ohne Trennung des Kohlenwasserstofflösungsmittels ist.

5. Prokatalysator nach einem der Ansprüche 1 bis 4, wobei die titanhaltige Komponente Titanchlorid ist und/oder wobei die titanhaltige Komponente $TiCl_4(OR)_{x-4}$ ist, wobei R $C_1-C_{21}$-Hydrocarbyl oder Kombinationen davon ist, x = 0, 1, 2, 3 oder 4.

6. Prokatalysator nach einem der Ansprüche 1 bis 5, wobei das Chlorierungsmittel ein Aluminiumalkylchlorid ist.

7. Prokatalysator nach einem der Ansprüche 1 bis 6, wobei die kohlenwasserstofflösliche Übergangsmetallverbindung mit einer Oxidationsstufe von größer als oder gleich 5+ ein Element umfasst, das aus der Gruppe ausgewählt ist, die aus Molybdän, Niob, Tantal, Wolfram und Kombinationen davon besteht.

8. Prokatalysator nach einem der Ansprüche 1 bis 7, wobei ein Molverhältnis der in der kohlenwasserstofflöslichen Übergangsmetallverbindung mit einer Oxidationsstufe von größer als oder gleich 5+ vorhandenen Übergangsmetalle zu dem in der titanhaltigen Verbindung vorhandenen Titan 0,1 bis 10,0 beträgt.

9. Prokatalysator nach einem der Ansprüche 1 bis 8, wobei ein Molverhältnis des Chlorierungsmittels zu dem in der titanhaltigen Komponente vorhandenen Titan 0,5 bis 100,0 beträgt.

10. Prokatalysator nach einem der Ansprüche 1 bis 9, wobei ein Molverhältnis des vorgeformten Magnesiumchlorid-Katalysatorträgers mit einer Oberfläche von größer als oder gleich 100 m$^2$/g zu Titan, das in der titanhaltigen Komponente vorhanden ist, von 1,0 bis 100,0 beträgt.

11. Katalysator, umfassend:

   den Prokatalysator nach einem der Ansprüche 1 bis 10; und
   einen Aluminiumalkyl-Cokatalysator.

12. Verfahren zum Polymerisieren von Polymeren auf Ethylenbasis, wobei das Verfahren das Inkontaktbringen von Ethylen und wahlweise einem oder mehreren $\alpha$-Olefinen in Gegenwart des Katalysators nach Anspruch 11 umfasst.

13. Verfahren zum Polymerisieren von Polymeren auf Ethylenbasis nach Anspruch 12, wobei es sich bei dem Polymerisationsverfahren um ein Lösungspolymerisationsverfahren handelt.

14. Verfahren zum Herstellen des Prokatalysatoren nach Anspruch 1, umfassend das Mischen von Folgendem: (A) die titanhaltige Komponente, (B) das Chlorierungsmittel und (C) die kohlenwasserstofflösliche Übergangsmetallverbindung mit einer Oxidationsstufe von größer als oder gleich 5+; zu dem vorgeformten Magnesiumchlorid-Katalysatorträger mit einer Oberfläche von größer als oder gleich 100 m$^2$/g, wobei die kohlenwasserstofflösliche Übergangsmetallverbindung mit einer Oxidationsstufe von größer als oder gleich 5+ kein Vanadium umfasst.

15. Verfahren nach Anspruch 14, wobei mindestens eines der Elemente (A), (B) oder (C) dem vorgefertigten Magnesiumchlorid-Katalysatorträger zeitlich getrennt von mindestens einem anderen der Elemente (A), (B) oder (C) zugesetzt wird.

**Revendications**

1. Procatalyseur, comprenant :

   un support de catalyseur de chlorure de magnésium préformé ayant une surface supérieure ou égale à 100 m$^2$/g ;
   un composant contenant du titane ;
   un agent de chloration ; et
   un composé de métal de transition soluble dans les hydrocarbures ayant un état d'oxydation supérieur ou égal à 5+, dans lequel le composé de métal de transition soluble dans les hydrocarbures ayant un état d'oxydation supérieur ou égal à 5+ ne comprend pas de vanadium ;
   dans lequel le composé de métal de transition est un complexe métal-ligand et

   (a) le complexe métal-ligand est un alcoxyde métallique ou un halogénure métallique ayant une formule structurelle $MX_{n-b}(OR^2)_b$, où M est un métal de transition ayant un état d'oxydation « n » qui est supérieur ou égal à 5+ (vanadium non inclus), X est un halogène, b va de 0 et n, et R$^2$ est un hydrocarbyle en $C_1$-$C_{20}$ ou un hétérohydrocarbyle en $C_1$-$C_{20}$ ; ou
   (b) le complexe métal-ligand est un oxyalcoxyde métallique ayant une formule structurelle $M(=O)X_{n-b}(OR^2)_b$, où M est le métal de transition ayant un état d'oxydation n qui est supérieur ou égal à 5+ (vanadium non inclus), X est un halogène, b va de 0 à n-2, et R$^2$ est un hydrocarbyle en $C_1$-$C_{20}$ ou un hétérohydrocarbyle en $C_1$-$C_{20}$.

2. Procatalyseur selon la revendication 1, dans lequel le composé de métal de transition soluble dans les hydrocarbures ayant un état d'oxydation supérieur ou égal à 5+ est un composé de métal de transition soluble dans les hydrocarbures aliphatiques ayant un état d'oxydation supérieur ou égal à 5+.

3. Procatalyseur selon l'une quelconque des revendications 1 et 2, dans lequel le support de catalyseur de chlorure de magnésium préformé a une surface supérieure ou égale à 150 m$^2$/g et/ou dans lequel le support de catalyseur de chlorure de magnésium préformé est une suspension de $MgCl_2$ dans un solvant hydrocarboné.

4. Procatalyseur selon la revendication 3, dans lequel la suspension de $MgCl_2$ est un produit de réaction d'une solution de composé d'alkylmagnésium dans un solvant hydrocarboné et une source de chlorure sans séparation du solvant hydrocarboné.

5. Procatalyseur selon l'une quelconque des revendications 1 à 4, dans lequel le composant contenant du titane est le chlorure de titane, et/ou dans lequel le composant contenant du titane est $TiCl_4(OR)_{x-4}$, où R est hydrocarbyle en $C_1$-$C_{21}$, ou des combinaisons de celui-ci, x = 0, 1, 2, 3, ou 4.

6. Procatalyseur selon l'une quelconque des revendications 1 à 5, dans lequel l'agent de chloration est un chlorure d'alkyle d'aluminium.

7. Procatalyseur selon l'une quelconque des revendications 1 à 6, dans lequel le composé de métal de transition soluble dans les hydrocarbures ayant un état d'oxydation supérieur ou égal à 5+ comprend un élément choisi dans le groupe constitué de molybdène, niobium, tantale, tungstène, et des combinaisons de ceux-ci.

8. Procatalyseur selon l'une quelconque des revendications 1 à 7, dans lequel un rapport molaire entre les métaux de transition présents dans le composé de métal de transition soluble dans les hydrocarbures ayant un état d'oxydation supérieur ou égal à 5+ et le titane présent dans le composé contenant du titane va de 0,1 à 10,0.

9. Procatalyseur selon l'une quelconque des revendications 1 à 8, dans lequel un rapport molaire entre l'agent de chloration et le titane présent dans le composant contenant du titane va de 0,5 à 100,0.

10. Procatalyseur selon l'une quelconque des revendications 1 à 9, dans lequel un rapport molaire entre le support de catalyseur de chlorure de magnésium préformé ayant une surface supérieure ou égale à 100 m$^2$/g et le titane présent dans le composant contenant du titane va de 1,0 à 100,0.

**11.** Catalyseur comprenant :

le procatalyseur selon l'une quelconque des revendications 1 à 10 ; et
un cocatalyseur d'alkyle d'aluminium.

**12.** Procédé de polymérisation de polymères à base d'éthylène, le procédé comprenant la mise en contact de l'éthylène et facultativement d'une ou plusieurs $\alpha$-oléfines en présence du catalyseur selon la revendication 11.

**13.** Procédé de polymérisation de polymères à base d'éthylène selon la revendication 12, dans lequel le procédé de polymérisation est un procédé de polymérisation en solution.

**14.** Procédé de préparation du procatalyseur selon la revendication 1, comprenant le mélange : (A) du composant contenant du titane, (B) de l'agent de chloration, et (C) du composé de métal de transition soluble dans les hydrocarbures ayant un état d'oxydation supérieur ou égal à 5+ ; sur le support de catalyseur de chlorure de magnésium préformé ayant une surface supérieure ou égale à 100 m$^2$/g, dans lequel
le composé de métal de transition soluble dans les hydrocarbures ayant un état d'oxydation supérieur ou égal à 5+ ne comprend pas de vanadium.

**15.** Procédé selon la revendication 14, dans lequel au moins l'un de (A), (B), ou (C) est ajouté au support de catalyseur de chlorure de magnésium préformé temporellement séparé d'au moins un autre de (A), (B) ou (C).

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62679279
- CA 1128920 A
- US 4361685 A
- WO 2012166490 A1
- US 78203 A, Cong
- WO 2018005821 A1